# FASCICULE DE BREVET EUROPEEN

(11) **EP 1 187 502 B1**
(45) Date de publication et mention de la délivrance du brevet: **26.05.2004**
(21) Numéro de dépôt: 01402033.3
(22) Date de dépôt: 26.07.2001
(51) Int. Cl.: H04Q 7/22

(54) **Procédé de communication entre une station base et un téléphone mobile et téléphone mobile utilisable pour mettre en oeuvre le procédé**
Verfahren zum Kommunizieren zwischen einer Basisstation und einem mobilen Telefon sowie ein dafür geeignetes mobiles Telefon
Method for communicating between a base station and a mobile phone and mobile phone suitable for carrying out the method

(30) Priorité: 28.07.2000 FR 0010014
(43) Date de publication de la demande: 13.03.2002
(73) Titulaire: SAGEM S.A., 75015 Paris (FR)
(72) Inventeur: Alos, Rafael, 95520 Osny (FR); Heurtaux, Frédéric, 13610 Le puy ste Reparade (FR)
(74) Mandataire: Schmit, Christian Norbert Marie

(56) Documents cités:
- DE-A- 19 856 401
- GRANBOHM H ET AL: "GPRS - GENERAL PACKET RADIO SERVICE" ERICSSON REVIEW,SE,ERICSSON. STOCKHOLM, no. 2, 1999, pages 82-88, XP000833940 ISSN: 0014-0171

## Description

La présente invention a pour objet un procédé de communication entre une station base et un téléphone mobile ainsi qu'un téléphone mobile utilisable pour mettre en oeuvre le procédé. Le but de l'invention est de permettre une utilisation plus grande d'un téléphone mobile même si ce téléphone mobile est d'une classe dégradée, a priori incapable de mettre en oeuvre certaines fonctions. D'une manière plus générale, l'invention vise à réduire le coût des téléphones mobiles en permettant à des téléphones mobiles élémentaires, à bas coûts, de fonctionner aussi bien que des téléphones mobiles munis de perfectionnements.

Plus précisément l'invention vise à permettre l'utilisation simultanée d'un téléphone mobile en mode de circuit et en mode paquet. Typiquement l'utilisation de téléphones mobiles en mode de circuit correspond à l'établissement d'un circuit entre deux Interlocuteurs, éventuellement entre deux dispositifs de transmissions de données. A ce titre, le téléphone mobile de l'invention ne sera pas uniquement utilisé dans une utilisation de phonie, mais pourra permettre, notamment par l'intermédiaire d'un connecteur d'embase, de servir de modem pour une telle transmission de données. Dans ce but, on continuera à utiliser ici cette terminologie bien qu'elle ne s'appliquera pas nécessairement à une liaison de phonie. Un fonctionnement en mode circuit à pour conséquence que, pendant toute une durée d'une communication, un canal de communication est réservé pour la communication. En conséquence l'utilisateur paye la location de ce canal au prorata de cette durée de communication, indépendamment de l'émission et de la réception de données.

Un autre mode de transmission connu est le mode de transmission par paquets. Dans un tel cas, des paquets sont émis et chaque paquet comporte une désignation de son destinataire. Les téléphones mobiles qui ne sont pas destinataires de l'information, ne conservent pas dans leur mémoire le contenu des paquets qui ne leurs sont pas destinés. Par ailleurs, pour éviter à ces téléphones mobiles d'effectuer les décodages de tous les paquets reçus, même ceux qui ne leur sont pas destinés, des signaux de signalisations émis par l'émetteur, donnent des rendez-vous temporels aux récepteurs pour que ceux-ci puissent se satisfaire du décodage des seuls signaux qui leur sont destinés. Dans l'autre sens, pour les transmissions de signaux du téléphone mobile vers une station de base, un système de jetons, ou de tours de rôle permet d'éviter que divers téléphones mobiles, à l'écoute d'un même canal, ne provoquent des collisions d'émission de signaux de données à émettre. La conséquence la plus importante du mode de transmission paquet est bien entendue que l'utilisateur ne paye le canal qu'au prorata de la quantité de paquets qui lui sont destinés ou qu'il envoie.

En pratique un tel téléphone mobile fonctionnant en mode de paquet est en permanence à l'écoute du canal de transmission par paquet. Il devient un acteur utilisant ce canal à la suite d'une procédure d'établissement d'une liaison pour des transmissions de signaux sur ce deuxième canal. Cette liaison établie est une connexion de type TBF, Temporary Block Flow - flux de bloc temporaire. Cette liaison est de durée finie, connue à l'avance. La valeur de cette durée est prévue dans des signaux de signalisation préalables notamment en fonction de la quantité de données à transmettre. Si la quantité de données à transmettre est trop importante, une durée TBF de base est instituée, et cette durée est reconduite à son issue tant que la totalité des informations à transmettre n'est pas transmise. En définitive, l'utilisateur paye pour un nombre de durées TBF qu'il a réellement utilisées.

Un téléphone mobile pour mettre en oeuvre ces modes de communications, circuit ou par paquet, peut être de trois classes. La classe C, correspondant aux téléphones mobiles les moins performants, possède une commande, imposée par l'utilisateur notamment à l'aide d'un clavier, pour faire fonctionner exclusivement le téléphone mobile en mode de circuit ou en mode de paquet. Selon sa présélection, au moment de sa mise en service et de sa reconnaissance par le réseau de téléphonie mobile, le téléphone mobile envoie un signal de type Cc, pour signaler sont utilisation possible en mode de circuit, ou un signal de type Cg (g - GPRS, Global Packet Radio System - système global de transmission de paquets radio) pour signaler son conditionnement en tant que récepteur de paquets. Dans la suite de l'exposé on parlera préférentiellement du mode paquet selon la norme GPRS. Toutefois il serait envisageable d'aborder dans le cadre de l'invention un mode de transmission paquet qui ne serait pas conforme à la norme GPRS, mais conforme à une autre norme.

Par opposition à ces appareils de classe C fonctionnant exclusivement dans un mode ou dans l'autre selon une action de l'utilisateur, on distingue les appareils de classe B, dans lesquels la commutation d'un mode de circuit à un mode de paquet est automatique. Le coût des appareils de classe B est peu différent du coût des appareils de classe C. Il est possible avec un appareil de classe B de mettre en oeuvre une fonction de type suspend - resume, suspension - reprise, au cours de laquelle on peut geler une session de communication dans un mode, en entamer une autre dans un autre mode, puis revenir à la première sans avoir perdu les informations distribuées. On peut aussi, notamment dans le mode GPRS, consulter un site Internet et basculer en mode de paroles en cours de communication avec la station base. Il n'est pas nécessaire, comme avec un appareil de classe C, de rompre la connexion avec la station base et de la réinitialiser en déclarant un autre mode d'utilisation.

Pour simplifier les explications, on admettra ici que le protocole d'échange dans le mode de circuit ainsi que dans le mode paquet, en téléphonie mobile sont de même type, notamment de type GSM. Pour chacun d'eux on définit, dans l'environnement d'une station de base donnée, des lois des fréquences, des niveaux d'émissions, des durées d'anticipation d'émission, et des allocations de fenêtres temporelles d'émission et de réception. De même des voies balises peuvent être différenciées. En pratique, le mode de gestion de la mobilité induit des circuits de fonctionnements différents dans le mode circuit, qui est plus particulièrement destiné à assurer cette mobilité, de ceux du mode GPRS, par paquet, pour lequel la mobilité est un accessoire en plus. Un téléphone mobile de classe B, en pratique, est muni d'un double système de veille pour détecter des appels classiques et des demandes de service GPRS. Ce double système de veille est susceptible de fonctionner à la demande expresse (sans réinitialisation - mais toutefois pas automatiquement), dans un mode ou dans un autre.

Pour l'utilisateur, ces fonctionnements sont différents. Ils nécessitent en pratique des équipements fixes de natures totalement différentes.

Pour avoir un fonctionnement simultané dans un mode et dans l'autre, il est prévu des téléphones mobiles de classe A. En pratique ces téléphones mobiles de classe A doivent être munis d'un double émetteur récepteur pour pouvoir émettre et recevoir à la fois dans un mode et dans un autre, simultanément. Bien entendu le coût de ces appareils de classe A est notablement plus élevé que celui des appareils de classe B et bien entendu que celui des appareils de classe C.

Les indications précieuses sur l'utilisation du mode de transmission GPRS sont par ailleurs données dans le livre "Réseaux GSM - DCS" de Xavier Lagrange, Philippe Godlevski et Sami Tabbane, édition Hermès, France, troisième édition, septembre 1997, Page 326 et suivantes.

Le but de l'invention est de simplifier la construction des téléphones mobiles et, notamment dans le cadre défini ci-dessus, de permettre à des téléphones mobiles de classe B, voire de classe C, de fonctionner comme les téléphones mobiles de classe A. La différence entre les téléphones mobiles de classes B ou C et les téléphones mobiles de classe A est essentiellement que les téléphones mobiles de classes B et C ne possèdent qu'un seul dispositif émetteur récepteur.

Pour permettre alors dans l'invention la simultanéité d'utilisation en mode de circuit et en mode paquet, GPRS, on prévoit de conditionner l'usage du mode de fonctionnement GPRS à la disponibilité de fenêtres temporelles, pour une loi de fréquence donnée. En effet, sans introduire immédiatement la notion d'agilité en fréquence, on peut définir un canal comme l'allocation d'une fenêtre temporelle dans une trame (en général des trames à huit fenêtres temporelles - TDMA, Time Division Multiple Acces - accès multiple à répartition dans le temps), et d'une fréquence de porteuse d'émission (ou de réception). En variante, dans un mode de transmission de type CDMA (Coded Division Multiple Access - Accès multiple à répartition par codage), on peut définir un canal par une allocation d'une séquence de codage particulière. Dans tous les cas, une trame correspond à une durée quantifiée pendant laquelle une quantité donnée d'information est transmise. Pour éviter une superposition de signaux et permettre de multiples communications avec des téléphones, il est prévu que pendant des même fenêtres temporelles des téléphones mobiles différents utilisent des fréquences de porteuses différentes ou, pour des mêmes fréquences de porteuses, utilisent des fenêtres temporelles différentes. En pratique le canal est alors différent. Il en est de même en CDMA où la séquence de codage est différente.

Dans l'invention, au moment de l'établissement d'un canal de communication par paquet, on mesure une disponibilité, pour une loi de fréquence donnée (correspondant de fait à la loi de fréquence en vigueur pour le téléphone mobile) et on émet une requête en transmission de paquets. On utilise alors des fenêtres temporelles identiques à celles utilisées par le téléphone mobile mais pour transmettre des paquets de données, en mode paquets. Pour éviter un chevauchement des signaux de parole émis en mode de circuit et des signaux de données émis en mode paquet, on privilégie alors la transmission des signaux de parole. Cependant, lorsque ces signaux de parole correspondent à des silences, parce que l'interlocuteur distant est muet, on utilise pour transmettre ces données le fait que la transmission de signaux de bruits acoustiques (qui donnent acte de la présence de l'interlocuteur) se réalise par un protocole de transmission discontinue, Discontinuous Transmission - DTX, qui n'exploite pas complètement le canal alloué.

Dans ce cas, pendant des fenêtres temporelles allouées (mais inutilisées), on transmet au téléphone mobile des données en mode paquet, sur le même canal. Il en serait de même en mode CDMA, où on utiliserait des trames entières, avec leur séquence de codage associée, pour transmettre des données à un téléphone mobile lorsque l'interlocuteur distant est muet.

En agissant ainsi, notamment en gardant une même loi de fréquence, on assure que pendant une trame, pendant les périodes d'émission ou de réception, le mobile n'a pas à se préoccuper, notamment en mode TDMA, de sauts de fréquence. Il est donc immédiatement disponible. Il est alors possible d'effectuer des transmissions en mode de circuit dans une fenêtre temporelle, puis des transmissions en mode paquet dans des fenêtres temporelles de même rang dans des trames consécutives. Les équipements du téléphone mobile nécessaires ne sont alors que son émetteur récepteur unique, lequel fonctionne pendant un nombre plus important de fenêtres temporelles sans difficulté particulière, et un logiciel d'exploitation complémentaire pour respecter un protocole de transmission différent. En pratique, du fait des silences, on estime que les communications n'utilisent que 60% du temps alloué en mode circuit. Une part importante des données peut donc être transmise pendant ces silences.

En outre, en agissant ainsi, dans la mesure ou les signaux transmis proviennent d'une même BTS, Base Transceiver Station - équipement d'émission réception de station de base, le codage de canal reste le même. De sorte que l'adaptation d'un filtre de canal du décodeur du téléphone mobile est immédiate. Tout au plus, le téléphone mobile doit commuter, d'une fenêtre temporelle réservée à un mode de circuit à une fenêtre temporelle suivante réservée à un mode paquet, ou vice versa, un mode de traitement des informations reçues dans chacune de ces fenêtres temporelles. Celles reçue dans le mode circuit doivent subir un traitement correspondant à l'utilisation en mode circuit. Celles reçues en mode paquet doivent subir un traitement correspondant au mode paquet.

En pratique, le mode de circuit sera la plupart du temps un mode de phonie, encore qu'il pourrait être un mode de transmission de données. Par opposition, le mode de transmission paquet sera plutôt réservé à des transmissions de données, comme celles correspondant à des visites de site Internet.

L'invention à donc pour objet un procédé de transmission de signaux de parole et de signaux de données entre au moins un téléphone mobile et une station de base d'un réseau de téléphonie mobile dans lequel
- on transforme des signaux acoustiques de parole en des premiers signaux électriques de parole,
- on transmet selon un premier protocole les signaux électriques de parole sur un canal de transmission,
- on transforme des signaux acoustiques de silence en des deuxièmes signaux électriques de parole,
- on transmet selon un deuxième protocole différent du premier protocole les deuxièmes signaux électriques de parole sur le même canal de transmission,
caractérisé en ce que
- on transmet des signaux électriques de données simultanément aux signaux électriques de parole, sur le même canal de transmission, selon un troisième protocole différent des deux premiers pendant des fenêtres temporelles laissées disponibles par le deuxième protocole.

L'invention a également pour objet un téléphone mobile comportant dans une mémoire un premier programme pour mettre en oeuvre un premier protocole de transmission de signaux de paroles et un deuxième programme pour mettre en oeuvre un deuxième protocole de transmission de signaux de données, caractérisé en ce qu'il comporte un comparateur pour comparer une partie caractéristique d'un signal reçu au cours d'une trame de transmission à un motif attendu, et un circuit pour mettre en oeuvre en correspondance le premier ou le second programme pour traiter une autre partie du signal reçu pendant la même trame de transmission.

L'invention sera mieux comprise à la lecture de la description qui suit à l'examen des figures qui l'accompagnent. Celles-ci ne sont présentées qu'à titre indicatif et nullement limitatif de l'invention. Les figures montrent :
- Figure 1 : une représentation schématique d'un système de communication entre une station base et des téléphones mobiles utilisables pour mettre en oeuvre le procédé de l'invention ;
- Figures 2a et 2b : des diagrammes temporels utilisés dans un mode circuit, et dans un mode de paquet respectivement ;
- Figures 3 et 4 : des représentations schématiques de circuits du téléphone mobile pour détecter dans des signaux respectivement reçus ou émis s'ils correspondent à des signaux de paroles ou à des signaux de données, afin de leur appliquer dans le téléphone mobile un traitement correspondant ;
- Figure 5 une représentation d'un perfectionnement du procédé lors de l'établissement des silences dans les signaux de parole.

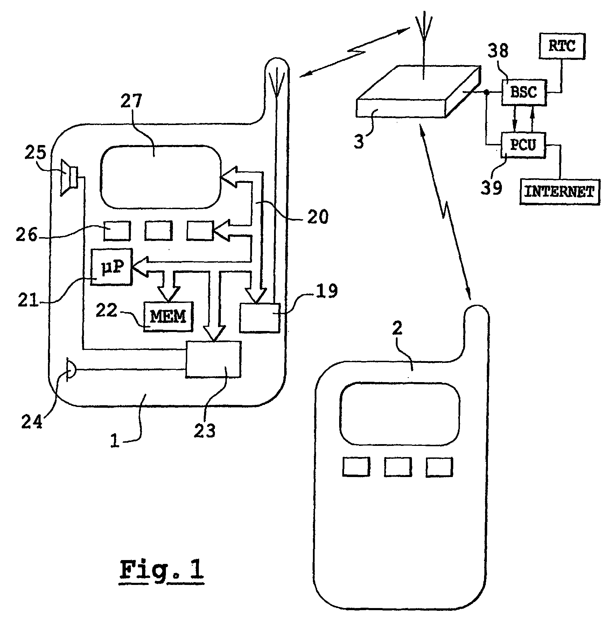

La figure 1 montre un système utilisable pour mettre en oeuvre le procédé de communication selon l'invention. Ce système comporte des téléphones mobiles 1 et 2 susceptibles d'entrer en relation avec une station de base 3 pour échanger des premiers signaux de parole et des deuxièmes signaux de données. Pour simplifier l'explication, par la suite on admettra, mais l'hypothèse inverse est bien sûr tout à fait envisageable, que les premiers signaux sont délivrés en mode de circuit, et qu'ils représentent des signaux de paroles. On admettra également que les deuxièmes signaux sont délivrés en mode de paquet et qu'ils représentent des signaux de données. Ils résultent par exemple de la consultation d'un site Internet. En effet, dans le cadre de la consultation d'un tel site Internet, la transmission sporadique de signaux conduit à ce qu'une grande quantité d'information peut être transmise pendant une courte durée suivie par une durée assez longue, pendant laquelle l'utilisateur examine sur un écran de son téléphone mobile des images résultant de la consultation. Pendant cette durée assez longue, aucun n'échange n'est entrepris.

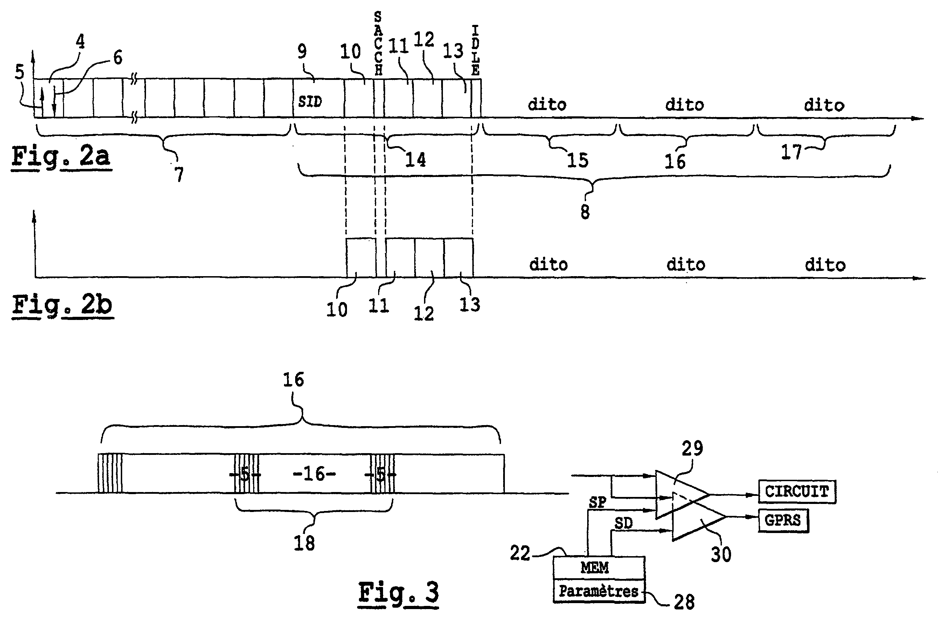

Conformément à la figure 2a, il est connu de recourir à différents protocoles de transmission selon qu'un locuteur, qui est sensé émettre, parle ou est muet. Qu'il parle ou se taise, partie gauche de la figure 2a, au cours d'une trame 4, il lui est allouée une fenêtre temporelle 5 pour émettre et une fenêtre temporelle 6 pour recevoir. Le contenu transmis dans ces fenêtres 5 et 6 varie cependant selon que ce locuteur parle ou est muet, ou selon que son interlocuteur distant parle ou est muet.

La figure 2a montre ainsi pendant une première période 7 la mise en oeuvre d'un premier protocole de transmission pour transmettre les signaux de paroles entre le locuteur, parlant dans le téléphone 1, et son interlocuteur qui parle aussi. Elle montre encore, pendant une deuxième période 8, dont la durée est dans un exemple un multiple de 104 trames, la mise en oeuvre d'un deuxième protocole dit de manière courante DTX. Dans le cadre du GSM, avec des trames de 4,615 millisecondes, la durée est de période 8 est ainsi cadencée par des périodes de 0,5 secondes. Pendant des durées telles que 8, un des deux interlocuteurs se tait, n'utilise pas la fenêtre temporelle 5, ou 6, qui lui est allouée. Pour éviter de surcharger le réseau, et essentiellement pour permettre une gestion de l'autonomie des téléphones mobiles (alimentés par des batteries), il est prévu selon le deuxième protocole DTX que des signaux de bruit ambiant détecté à l'endroit du locuteur qui se tait ne soient pas transmis avec autant d'effort (avec autant de bits significatifs transmis) que s'il s'agit d'informations utiles.

Dans le protocole de type DTX, le débit est suffisant pour coder le bruit de fond, et le restituer du côté récepteur, sans que l'usager ne détecte une quelconque rupture. Cette reconstitution du bruit de fond s'appelle aussi bruit de confort. Le protocole DTX permet ainsi d'alterner entre un mode de transmission de 260 bits par 20 millisecondes et un mode de transmission de 260 bits par 480 millisecondes. Le mécanisme DTX requiert les fonctions suivantes : un détecteur d'activités vocales du côté émetteur, l'évaluation du bruit de fond du côté émetteur, pour transmettre les paramètres caractéristiques de ce bruit de fond au récepteur, et la génération du côté récepteur du bruit de confort pendant les périodes où la transmission radio est interrompue. Lorsque l'usager ne parle pas, le téléphone mobile ou la station de base transmet des trames dites SID (Silence Descriptor - Description de silence). Une suite de trames SID est transmise au début de chaque période d'inactivité et d'autres sont ensuite émises régulièrement, au moins deux fois par seconde pendant les périodes d'inactivité.

En pratique, une hypertrame de 104 trames comporte 4 groupes de 26 trames chaque groupe de 26 trames comportant un premier groupe 9 de 8 trames pendant lesquelles les caractéristiques du bruit sont émises. Le groupe 9 sert à rafraîchir les informations relatives au bruit ambiant du côté du locuteur distant. Le téléphone 1 est normalement obligé de recevoir les trames du groupe 9. En temps normal, le téléphone 1 peut se mettre en sommeil pendant les autres trames de l'hypertrame. Le groupe 9 est suivi par un sous-groupe 10 de quatre trames successives sensées transporter des signaux de paroles, mais qui en pratique ne transportent rien si la liaison est silencieuse de la part de l'émetteur.

Le sous-groupe 10 est suivi d'une fenêtre temporelle dans une trame dite SACCH dont la signification est Slow Assiocated Control Channel c'est-à-dire Canal de Commande Associé à un Trafic Lent. Pendant cette fenêtre temporelle, la station de base 3 donne au téléphone 1 la liste des stations de base voisines que le téléphone 1 doit surveiller. Pendant cette fenêtre temporelle également le téléphone 1 remonte vers la station de base 3 des informations de mesure concernant ces stations de base voisines et qu'il a préalablement effectuées. Ces mesures sont essentiellement des mesures de niveau de signal reçu.

Après la fenêtre temporelle de type SACCH, suivent trois sous-groupes de trames 11, 12 et 13 du même type que le sous-groupe 10. Un groupe de 26 trames est par ailleurs terminé par une trame dite Idle, qui signifie oisif. Pendant une fenêtre temporelle de réception de cette trame Idle le téléphone 1 est chargé d'effectuer des recherches FCH, SCH sur des stations de base voisines. Il doit en remonter les résultats pendant la fenêtre temporelle SACCH. Après un premier groupement 14 de 26 trames suivent dans l'hypertrame 8 trois autres groupements 15, 16 et 17 de 26 trames également. Ces groupements 15 à 17 proposent bien entendu des trames du même type que celle du groupement 14.

Selon l'invention, on utilise les fenêtres temporelles de ces sous-groupes de trames 10 à 13 et des groupes 15 à 17 pour transmettre des données. Dans ce but, deux opérations sont à effectuer. D'une part il faut que le téléphone mobile reçoive et décode les signaux transmis pendant les trames des sous-groupes de trames 10 à 13, dans les fenêtres 6, alors que normalement il aurait pu se mettre en sommeil de réception. On obtient ce premier résultat en faisant en sorte que le système d'exploitation du téléphone 1 détecte que le téléphone 1 est en communication simultanée de paroles (parce qu'une communication téléphonique a été échangée avec un interlocuteur) et de données (parce que par exemple une consultation d'un site Internet a été entreprise). Dans ce cas au lieu de s'endormir pendant les groupes de trames 10 à 13 le téléphone mobile cherchera à décoder les signaux reçus pendant toutes les trames de ces groupes de trames 14 à 17.

Dans l'invention, ce décodage se réalise selon un troisième protocole. De préférence le troisième protocole est un protocole en mode paquets, notamment de type GPRS compatible avec la norme GSM. Cependant il serait possible d'envoyer des données selon un mode de circuit. Que l'envoi soit effectué en mode paquets ou en mode circuit, le troisième protocole est d'autre part reconnaissable par le téléphone 1, dans les signaux transmis, pour lui permettre de décoder en correspondance les signaux de données comme des signaux de données (et non pas comme des signaux de parole).

D'une manière préférée, pour permettre cette reconnaissance par le téléphone 1 de la nature des signaux qu'il reçoit, on prévoit qu'au cours de chaque fenêtre temporelle 6 une séquence d'apprentissage 18 soit différente selon que les bits transmis correspondent à des paroles ou des données. Une telle séquence d'apprentissage 18 comporte, dans le cas de la norme GSM, 26 bits constitués par 5 bits de début, 16 bits signifiants et 5 bits de fin.

Le fonctionnement du téléphone 1 est le suivant. Figure 1, un circuit d'émission-réception 19 du téléphone 1 est relié par un bus 20 à un microprocesseur 21 mettant en oeuvre un programme général de gestion du téléphone 1. Ce programme général est contenu dans une mémoire 22 également reliée au bus 20. Le bus 20 est également relié à un circuit 23 d'émission-réception acoustique relié à un microphone 24 et un haut-parleur 25 ainsi qu'à un clavier 26 et à un écran 27. Le clavier 26 et l'écran 27 peuvent servir pour visualiser ou traiter des signaux de données alors que le microphone 24 et le haut-parleur 25 servent à traiter des signaux acoustiques de parole. La mémoire 22 comporte en plus du système d'exploitation une partie 28 de paramètres. Dans cette partie de paramètres sont mémorisées d'une part des informations de loi de fréquence permettant notamment l'agilité en fréquence, ainsi que des séquences types de bits significatifs à utiliser comme séquence d'apprentissage.

Au moment de la réception et du décodage, le téléphone 1 effectue une comparaison, schématiquement représentée par un comparateur 29 pour comparer une séquence d'apprentissage SP mémorisée dans la mémoire 22 et relative à des signaux de paroles à une séquence d'apprentissage réellement décodée. Si cette comparaison est positive, la fonction de comparaison 29 retentit en une utilisation en mode circuit du téléphone 1. Les signaux de parole reçus sont acheminés sur le haut-parleur 25. Dans l'utilisation de l'état de la technique, si cette reconnaissance ne se produit pas, les signaux ne sont pas exploités, et ne sont donc pas transmis au haut-parleur 25.

Dans l'invention, la fonction de comparaison sera dédoublée en une fonction de comparaison 29 et 30. La séquence d'apprentissage 18 décodée sera alors comparée non plus seulement à une séquence correspondant à un mode de transmission de paroles mais aussi à une autre séquence SD, elle aussi convenue à l'avance et représentative d'un mode de transmission de données, de préférence par paquets. Cette séquence SD convenue à l'avance est notamment signalée au téléphone 1 lorsque celui-ci émet une requête en transmission en mode paquets. La séquence de parole, SP est différente de la séquence d'apprentissage SD. Selon l'invention, au moment des trames 10 à 13, et dans les groupes 15 à 17, les signaux émis dans les fenêtres temporelles 6 (et sur une même fréquence que celle qu'attend le téléphone 1) comportent en partie médiane 18 une séquence d'apprentissage reconnaissable par le comparateur 30. Dans ce cas le traitement de ces signaux est effectué en correspondance.

Les fonctions de comparaison 29 et 30 peuvent ne pas être simultanées, une seule d'entre elles étant menée à terme, et selon que le résultat du décodage correspondra à l'extraction d'une séquence d'apprentissage attendue (par exemple celle SP du mode circuit de transmission de paroles) ce mode sera retenu, l'autre mode étant retenu en cas d'échec de la comparaison.

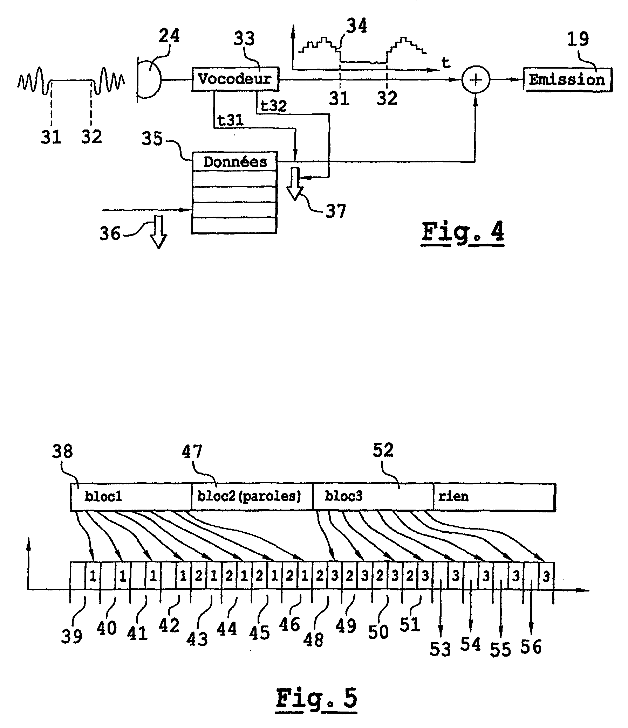

La figure 4 montre dans le sens montant la transmission simultanée de paroles et de données à partir du téléphone mobile1. Le locuteur du téléphone 1 parle ainsi, au cours d'une communication de téléphonie, dans le microphone 24 jusqu'à une date 31 puis il se tait et recommence à parler à une date 32. Le microprocesseur 21, en exécution du programme contenu dans la mémoire 22 met en oeuvre un vocodeur 33 qui produit en sortie des signaux numériques tels que 34. Ces signaux numériques sont des signaux de silence entre les dates 31 et 32. La date 31 est, selon ce qui a été indiqué précédemment la date à laquelle le détecteur d'activité vocale du côté émetteur détecte la fin de l'activité vocale. La date 32 est celle où il détecte la reprise de cette activité vocale. Ce détecteur d'activité, où le vocodeur 33, produisent donc des signaux t31 et t32 correspondant pour l'envoi de données.

Avec le clavier 26, l'utilisateur compose des messages de données. Selon un perfectionnement de l'invention ces messages de données sont préalablement enregistrés dans une mémoire tampon 35 dans des cases mémoires successives, par l'intermédiaire d'un pointeur progressif d'écriture 36. Pour émettre alors les données pendant les silences, on utilise le signal t31, signalant la disponibilité du canal de transmission de parole (puisqu'il y a des silences) pour envoyer des données. Un pointeur de lecture 37 déclenché par le signal t31 prélève alors les données de la mémoire 35 et les transmet au circuit d'émission 19. Lorsque le signal t32 survient, le pointeur de lecture 37 est bloqué et le dispositif d'émission 19 émet des signaux de parole en correspondance.

Afin de prévenir la station de base 3 de la nature des signaux, de paroles ou de données qu'elle reçoit, on peut prévoir que le vocodeur 33, ou les pointeurs d'écriture 36 ou de lecture 37, soient associées à des mécanismes d'adjonction des séquences d'apprentissage correspondantes, différentes d'un cas à l'autre. D'une manière générale, on détectera dans le téléphone 1 l'apparition de silences pour transmettre les données.

La figure 1 montre que la station de base 3 est reliée à des circuits 3.1 BSC Base Station Controller - Contrôleur de Station de Base qui assurent en pratique la gestion des ressources ainsi que la signalisation à appliquer pour que les téléphones mobiles 1 et 2 sachent respectivement extraire les signaux qui les concernent des signaux qui concernent les autres téléphones mobiles. Les circuits BSC acheminent en même temps des signaux en provenance d'un réseau téléphonique de type RTC, RNIS ou autre.

A côté des équipements nécessaires à la transmission en mode de circuit, coexistent des équipements nécessaires à la transmission en mode paquets. Dans un équipement général, des circuits 3.2 dits PCU, Packet Control Unit - Unité de Contrôle de Paquets, sont utilisés pour transmettre les paquets de données, notamment en provenance ou à destination du réseau Internet. Les circuits PCU jouent globalement un même rôle que les circuits BSC. En principe les circuits BSC sont indépendants des circuits PCU. Notamment les téléphones mobiles sont amenés à utiliser des canaux différents selon qu'ils ont à échanger des paroles ou des données. Dans l'invention, on tire parti du fait que le téléphone 1 est déjà calé sur un canal pour, de préférence, envoyer les paquets de données dans ce même canal : notamment sur la même fréquence et en particulier pendant les même fenêtres temporelles que celles qui servent pour la transmission de paroles. Il serait toutefois possible de prévoir un autre canal, avec une autre loi de fréquence pour le mode de transmission de données, notamment en paquets. On préfère toutefois dans l'invention garder le même canal. Dans ce but on peut prévoir que les circuits PCU 39 interrogent préalablement les circuits BSC pour connaître le canal que ces derniers ont imposé. Puis les circuits PCU organisent leur distribution en fonction des disponibilités dans la trame. Les circuits PCU n'ont pas besoin d'être synchronisés avec les circuits BSC 3.1. Leurs fenêtres temporelles d'ordre zéro n'ont ainsi pas besoin de se produire en même temps. Si aucune synchronisation existe, il importe toutefois de repérer les fenêtres temporelles dans un mode pour leur donner un rang correspondant dans l'autre mode.

Dans le cas où l'on accepte un autre canal, on peut prévoir, si un autre téléphone mobile 2 est en relation avec la station de base 3 et si l'interlocuteur distant en communication avec ce téléphone 2 est muet, d'utiliser le canal de transmission descendant de ce téléphone mobile 2 pour transmettre des données au téléphone 1. Le téléphone 1 peut donc recevoir des données sur son propre canal de réception, lorsque son interlocuteur distant est muet et recevoir des données sur le canal de réception du téléphone 2 lorsque l'interlocuteur distant de ce téléphone 2 est muet. La station de base 3 peut dans ce dernier cas transmettre au téléphone 1, sur le canal du téléphone 1, les signaux de parole en provenance de l'interlocuteur de ce téléphone 1 dans la mesure où ce dernier parle, et des signaux de données sur le canal descendant du téléphone 2, pendant d'autres fenêtres temporelles décalées de la fenêtre temporelle 6 et de la fenêtre temporelle 5.

Dans tous les cas les signaux de données transmis comporteront soit un entête permettant leur reconnaissance comme signaux de données, soit de préférence selon l'invention une séquence d'apprentissage différente indiquant le changement de protocole.

Du fait de l'émission en mode paquets, plusieurs utilisateurs sont à l'écoute des paquets transmis. Par exemple l'utilisateur du téléphone mobile 2 pourrait lui aussi être en relation de données avec le réseau Intemet. Pour permettre alors au téléphone 1 de savoir quel est le destinataire des paquets de données transmis, et compte tenu du caractère inopiné de l'émission de ces derniers (ils sont émis pendant des silences de communication dont la distribution est a priori aléatoire), on peut prévoir deux solutions. Selon une première solution, pendant une des trames inutilisées des groupes 10, on peut désigner un destinataire. En variante, dans les séquences d'apprentissage dévolues au mode de transmission de données, on distinguera des séquences d'apprentissage utilisables par le téléphone 1 pour recevoir des données et des séquences d'apprentissage utilisables par le téléphone mobile 2 pour recevoir des données. Au décodage seul celui qui reconnaît sa séquence d'apprentissage de réception de données utilise des informations.

Lorsqu'une station de base n'est pas en relation avec un téléphone 1, elle est susceptible d'appeler ce téléphone 1 à tout moment. Les signaux d'appel sont des signaux dits de paging. Ces signaux comportent la convocation du téléphone 1 sur un canal dit PCH Paging Channel. Les stations de base émettent des blocs de données de paging que les téléphones mobiles sont tenus d'écouter périodiquement, afin de savoir s'ils sont appelés par le réseau. De préférence les téléphones mobiles sont répartis en groupes de paging, qui écoutent des séquences de blocs de paging différents afin d'avoir un débit d'appels entrants optimisés. Dans l'invention on prévoit, si aucun signal de paging n'est à envoyer d'utiliser le canal de paging pour transmettre des données en mode paquets.

La figure 5 montre un aspect complémentaire de l'invention. En pratique, les données de parole, selon un protocole de paroles, sont regroupées en blocs et l'émission d'un bloc est réparties sur 8 trames consécutives. Par exemple un premier bloc 38 de paroles est réparti dans des trames 39 à 46. Un deuxième bloc 47 est réparti dans les mêmes conditions dans les blocs 43 à 46 et 48 à 51. Si un troisième bloc 52 correspond à des silences, des trames suivantes 53 à 57 (ainsi que les huit trames suivantes correspondant au groupement 9 de huit trames, figure 2a) seront en partie inemployées puisqu'il n'y a rien à transmettre. Dans ce cas on peut utiliser les demi-débits ainsi libérés pour transmettre des données. Dans ce cas toutefois, le décodage des données même envoyées en mode paquets devra subir un décodage correspondant au décodage des signaux de paroles puisque les signaux du troisième bloc 52 ainsi que les signaux SID doivent être décodés selon ce protocole.

Compte tenu du caractère intempestif de la transmission de données, on peut prévoir que par défaut le protocole de transmission adopté par le téléphone mobile soit le troisième protocole celui correspondant à la transmission de données.

## Revendications

1. Procédé de transmission de signaux de parole et de signaux de données entre au moins un téléphone mobile et une station de base d'un réseau de téléphonie mobile dans lequel
- on transforme des signaux acoustiques de parole en des premiers signaux électriques de parole,
- on transmet selon un premier protocole les signaux électriques de parole sur un canal de transmission,
- on transforme des signaux acoustiques de silence en des deuxièmes signaux électriques de paroles,
- on transmet selon un deuxième différent du premier protocole les deuxièmes signaux électriques de parole sur le même canal de transmission,
**caractérisé en ce que**
- on transmet des signaux électriques de données simultanément aux signaux électriques de parole, sur le même canal de transmission, selon un troisième protocole différent des deux premiers pendant des fenêtres temporelles laissées disponibles par le deuxième protocole.

2. Procédé selon la revendication 1, **caractérisé en ce que**, en réception,
- on distingue le premier protocole ou le deuxième protocole du troisième protocole par une configuration d'une séquence d'apprentissage différente, une telle séquence d'apprentissage étant présente dans des trains de symboles transmis selon ces protocoles,
- on décode un train de symboles reçus selon un des protocoles et on en extrait une séquence d'apprentissage,
- on déduit selon la nature de la séquence d'apprentissage extraite de ce train de symboles reçus et décodés la nature de parole ou de données des signaux transmis.

3. Procédé selon l'une des revendications 1 à 2, **caractérisé en ce que**
- Le troisième protocole est un protocole en mode paquet.

4. Procédé selon l'une des revendications 1 à 3, **caractérisé en ce que**
- on mémorise des paquets de données à transmettre dans une mémoire tampon,
- et on transmet les signaux électriques de données en les extrayant de cette mémoire tampon.

5. Procédé selon l'une des revendications 1 à 4, **caractérisé en ce que**
- on mesure l'état de fonctionnement ou de non-fonctionnement d'un vocodeur du téléphone mobile, et
- on transmet des signaux de voix ou de données à transmettre en fonction respectivement de cet état mesuré de fonctionnement on de non-fonctionnement.

6. Procédé selon l'une des revendications 1 à 5, **caractérisé en ce que**
- on détecte la transmission des deuxièmes signaux électriques de paroles,
- et on transmet des signaux de données ou de voix à transmettre en fonction respectivement de cette détection.

7. Procédé selon l'une des revendications 1 à 6, **caractérisé en ce que**
- la station de base est munie de premiers circuits de gestion des transmissions de signaux électriques de parole et de deuxièmes circuits de gestion des transmissions de signaux électriques de données,
- les premiers et deuxièmes circuits se communiquent des informations pour synchroniser leur émission de signaux électriques.

8. Procédé selon l'une des revendications 1 à 7, **caractérisé en ce que**
- un premier téléphone mobile échange des signaux électriques de parole ou de silence avec la station de base sur un premier canal de transmission,
- un deuxième téléphone mobile échange des signaux électriques de parole ou de silence avec la station de base sur un deuxième canal de transmission,
- le premier téléphone mobile échange des signaux de données avec la station de base sur le deuxième canal de transmission.

9. Procédé selon l'une des revendications 1 à 8, **caractérisé en ce que**
- les fenêtres sont laissées disponibles sur un canal de paging.

10. Procédé selon l'une des revendications 1 à 9, **caractérisé en ce que**
- pendant des trames émises selon le deuxième protocole, on complète des trames de signaux électriques de silence par des signaux électriques de données.

11. Procédé selon l'une des revendications 1 à 10, **caractérisé en ce que**
- le téléphone mobile adopte alternativement les deux premiers protocoles ou le troisième protocole, et **en ce que**
- par défaut, le téléphone mobile adopte le troisième protocole.

12. Téléphone mobile comportant dans une mémoire un premier programme pour mettre en oeuvre un premier protocole de transmission de signaux de paroles et un deuxième programme pour mettre en oeuvre un deuxième protocole de transmission de signaux de données, **caractérisé en ce qu'**il comporte un comparateur pour comparer une partie caractéristique d'un signal reçu au cours d'une trame de transmission à un motif attendu, et un circuit pour mettre en oeuvre le premier ou le second programme pour traiter une autre partie du signal reçu pendant la même trame de transmission.

## Patentansprüche

1. Verfahren zur Übertragung von Sprach- und Datensignalen zwischen wenigstens einem Mobiltelefon und einer Basisstation eines Mobiltelefonnetzes, bei dem
- akustische Sprachsignale in erste elektrische Sprachsignale umgewandelt werden,
- die elektrischen Sprachsignale gemäß eines ersten Protokolls über einen Übertragungskanal übertragen werden,
- akustische Ruhesignale in zweite elektrische Sprachsignale umgewandelt werden,
- die zweiten elektrischen Sprachsignale gemäß einem zweiten, vom ersten Protokoll unterschiedlichen Protokoll, über denselben Übertragungskanal übertragen werden,
**dadurch gekennzeichnet, dass**
- gleichzeitig mit den elektrischen Sprachsignalen elektrische Datensignale über denselben Übertragungskanal nach einem dritten, von den beiden ersten Protokollen unterschiedlichen Protokoll übertragen werden während Zeitfenstern, die vom zweiten Protokoll freigelassen werden.

2. Verfahren nach Anspruch 1, **dadurch gekennzeichnet, dass** während des Empfangs
- das erste oder das zweite Protokoll vom dritten Protokoll durch eine Konfiguration einer unterschiedlichen Lernsequenz unterschieden wird, wobei die Lernsequenz in den gemäß diesen Protokollen übertragenen Symbolketten vorkommt,
- eine empfangene Symbolkette dekodiert wird gemäß einem dieser Protokolle und daraus die Lernfrequenz extrahiert wird,
- aus der Art der aus der empfangenen und decodierten Symbolkette extrahierten Lernsequenz die Art der Signale als Sprach- oder Datensignale abgeleitet wird.

3. Verfahren nach Anspruch 1 oder 2, **dadurch gekennzeichnet, dass**
- das dritte Protokoll ein Protokoll im Paketmodus ist.

4. Verfahren nach einem der Ansprüche 1 bis 3, **dadurch gekennzeichnet, dass**
- die zu übertragenden Datenpakete in einem Pufferspeicher gespeichert werden
- und die elektrischen Datensignale übertragen werden, indem sie aus diesem Pufferspeicher ausgelesen werden.

5. Verfahren nach einem der Ansprüche 1 bis 4, **dadurch gekennzeichnet, dass**
- der Arbeits- oder Ruhezustand einer Sprachkodiereinrichtung des Mobiltelefons gemessen wird und
- zu übertragende Sprach- oder Datensignale in Abhängigkeit des gemessenen Arbeits- oder Ruhezustand übertragen werden.

6. Verfahren nach einem der Ansprüche 1 bis 5, **dadurch gekennzeichnet, dass**
- die Übertragung von zweiten elektrischen Sprachsignalen detektiert wird
- und zu übertragende Daten- oder Sprachsignale in Abhängigkeit der Detektion übertragen werden.

7. Verfahren nach einem der Ansprüche 1 bis 6, **dadurch gekennzeichnet, dass**
- die Basisstation mit ersten Schaltkreisen zur Verwaltung der Übertragung der elektrischen Sprachsignale und mit zweiten Schaltkreisen zur Verwaltung der Übertragung der elektrischen Datensignale versehen ist und
- die ersten und zweiten Schaltkreise sich Informationen zur Synchronisation ihrer Aussendung von elektrischen Signalen übermitteln.

8. Verfahren nach einem der Ansprüche 1 bis 7, **dadurch gekennzeichnet, dass**
- ein erstes Mobiltelefon elektrische Sprach- oder Ruhesignale mit der Basisstation auf einem ersten Übertragungskanal austauscht,
- ein zweites Mobiltelefon elektrische Sprach- oder Ruhesignale mit der Basisstation auf einem zweiten Übertragungskanal austauscht,
- das erste Mobiltelefon Datensignale mit der Basisstation auf dem zweiten Übertragungskanal austauscht.

9. Verfahren nach einem der Ansprüche 1 bis 8, **dadurch gekennzeichnet, dass**
- die Fenster auf einem Paging-Kanal offengelassen werden.

10. Verfahren nach einem der Ansprüche 1 bis 9, **dadurch gekennzeichnet, dass**
- in den Rahmen, die gemäß dem zweiten Protokoll gesendet werden, Rahmen elektrischer Ruhesignale ergänzt werden durch elektrische Datensignale.

11. Verfahren nach einem der Ansprüche 1 bis 10, **dadurch gekennzeichnet, dass**
- das Mobiltelefon entweder die ersten beiden Protokolle oder das dritte Protokoll annimmt, und
- das Mobiltelefon ohne andere Zuordnung das dritte Protokoll annimmt.

12. Mobiltelefon mit einem Speicher mit einem ersten Programm zur Umsetzung eines ersten Übertragungsprotokolls für Sprachsignale und einem zweiten Programm zur Umsetzung eines zweiten Übertragungsprotokolls zur Übertragung von Datensignalen, **dadurch gekennzeichnet, dass** es einen Vergleicher zum Vergleich eines charakteristischen Teils eines empfangenen Signals innerhalb eines Übertragungsrahmens mit einem erwarteten Motiv aufweist und einen Schaltkreis zur Umsetzung des ersten oder zweiten Programms zur Verarbeitung eines anderen Teils des empfangenen Signals innerhalb desselben Übertragungsrahmens.

## Claims

1. Method for transmission of voice signals and data signals between at least one mobile telephone and a base station of a mobile telephone network in which
- acoustic voice signals are transformed into first electrical voice signals,
- the electrical voice signals are transmitted over a transmission channel in accordance with a first protocol,
- acoustic silence signals are transformed into second electrical voice signals,
- the second electrical voice signals are transmitted over the same transmission channel in accordance with a second protocol different from the first,
**characterised by** the fact that
- electrical data signals are transmitted simultaneously with the electrical voice signals, over the same transmission channel, in accordance with a third protocol different from the first two, during time windows left available by the second protocol.

2. Method as described in claim 1, **characterised by** the fact that, on reception,
- the first protocol or the second protocol is distinguished from the third protocol by a configuration of a different initialisation sequence, such an initialisation sequence being present in strings of symbols transmitted in accordance with these protocols,
- a string of symbols received in accordance with one of the protocols is decoded and an initialisation sequence is extracted from it,
- depending on the nature of the initialisation sequence extracted from this string of symbols received and decoded, the voice or data nature of the signals transmitted is deduced.

3. Method as described in one of claims 1 to 2, **characterised by** the fact that
- the third protocol is a protocol using packet mode.

4. Method as described in one of claims 1 to 3, **characterised by** the fact that
- data packets to be transmitted are stored in a buffer memory,
- and the electrical data signals are transmitted, extracting them from this buffer memory.

5. Method as described in one of claims 1 to 4, **characterised by** the fact that
- the state of operation or non-operation of a vocoder of the mobile telephone is measured, and
- voice or data signals are transmitted as a function of this measured state of operation or non-operation respectively.

6. Method as described in one of claims 1 to 5, **characterised by** the fact that
- transmission of the second electrical voice signals is detected,
- and data or voice signals to be transmitted are transmitted respectively as a function of this detection.

7. Method as described in one of claims 1 to 6, **characterised by** the fact that
- the base station is provided with first circuits for management of the transmissions of electrical voice signals and with second circuits for management of the transmissions of electrical data signals,
- the first and second circuits communicate to each other information to synchronise their emission of electrical signals.

8. Method as described in one of claims 1 to 7, **characterised by** the fact that
- a first mobile telephone exchanges electrical voice or silence signals with the base station over a first transmission channel,
- a second mobile telephone exchanges electrical voice or silence signals with the base station over a second transmission channel,
- the first mobile telephone exchanges data signals with the base station over the second transmission channel.

9. Method as described in one of claims 1 to 8, **characterised by** the fact that
- the windows are left available over a paging channel.

10. Method as described in one of claims 1 to 9, **characterised by** the fact that
- during frames transmitted in accordance with the second protocol, frames of electrical silence signals are completed by electrical data signals.

11. Method as described in one of claims 1 to 10, **characterised by** the fact that
- the mobile telephone alternatively adopts the first two protocols or the third protocol, and by the fact that
- by default, the mobile telephone adopts the third protocol.

12. Mobile telephone including in a memory a first program for implementing a first protocol for transmission of voice signals and a second program for implementing a second protocol for transmission of data signals, **characterised by** the fact that it includes a comparator for comparing a characteristic part of a signal received during a transmission frame with an awaited pattern, and a circuit for using the first or the second program for processing another part of the signal received during the same transmission frame.
